(19) Europäisches Patentamt
European Patent Office
Office européen des brevets

(11) Veröffentlichungsnummer: **0 055 380**
**B1**

# (12) EUROPÄISCHE PATENTSCHRIFT

(45) Veröffentlichungstag der Patentschrift: **27.06.84**

(51) Int. Cl.³: **C 09 B 35/28** // D06P1/18, D21H1/46

(21) Anmeldenummer: **81109213.9**

(22) Anmeldetag: **29.10.81**

## (54) Disazoverbindungen, Verfahren zu ihrer Herstellung und ihre Verwendung.

(30) Priorität: **23.12.80 DE 3048610**

(43) Veröffentlichungstag der Anmeldung: **07.07.82 Patentblatt 82/27**

(45) Bekanntmachung des Hinweises auf die Patenterteilung: **27.06.84 Patentblatt 84/26**

(84) Benannte Vertragsstaaten: **CH DE FR GB LI**

(56) Entgegenhaltungen:
**FR - A - 1 000 008**
**FR - A - 2 187 860**
**FR - A - 2 370 780**
**GB - A - 849 376**

(73) Patentinhaber: **HOECHST AKTIENGESELLSCHAFT, Postfach 80 03 20, D-6230 Frankfurt am Main 80 (DE)**

(72) Erfinder: **Pesenacker, Manfred, Dr., Brunnenstrasse 9, D-6232 Bad Soden am Taunus (DE)**

**EP 0 055 380 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung sind Disazoverbindungen der allgemeinen Formel I

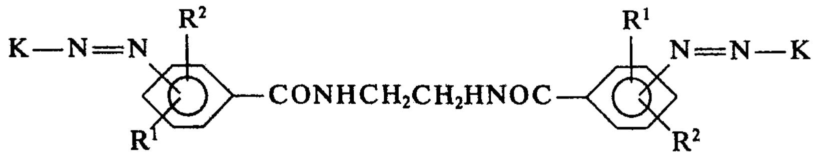

(I)

in der $R^1$ und $R^2$ gleich oder verschieden sein können und Wasserstoff, Chlor oder Brom, Methyl, Ethyl, Methoxy oder Ethoxy bedeuten.

Aus der FR-A-1 000 008 sind ähnliche Verbindungen bekannt, die sich jedoch vom p-Aminobenzoyl(β-p-aminobenzoyloxy)-äthylamid als Diaminokomponente ableiten. Aufgrund der Esterbindung im Molekül haben diese Verbindungen eine verminderte Beständigkeit gegenüber Hitzeeinwirkung und dem Einfluß von Chemikalien.

In der Formel I bedeutet K Reste von gleichen oder verschiedenen Kupplungskomponenten, die keine löslichmachenden Gruppen enthalten und stellt den Rest einer enolisierbaren Ketomethylenverbindung, wie beispielsweise eines Acetessiganilids oder N-Heterocyclus dar. Bevorzugte Reste K dieser Art entsprechen den Formeln II—VI,

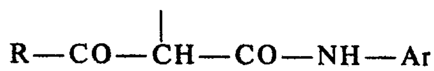

(II)

wobei R Methyl oder Phenyl ist und Ar ein Rest der Formel

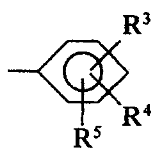

(IIa)

ist, in welchem $R^3$, $R^4$ und $R^5$, die gleich oder verschieden sind, Wasserstoff, Chlor, Brom, niederes Alkyl, niederes Alkoxy, niederes Alkanoylamino, Benzoylamino oder Nitro bedeuten, oder Ar ein Rest der Formeln (IIb)—(IIh)

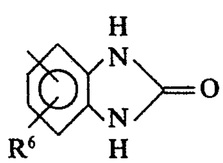

(IIb)

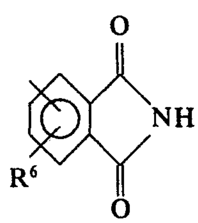

(IIc)

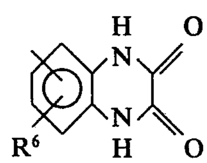

(IId)

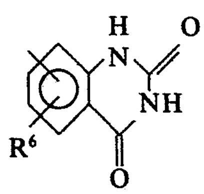

(IIe)

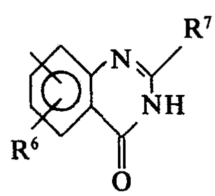

(IIf)

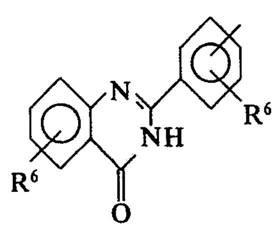

(IIg)

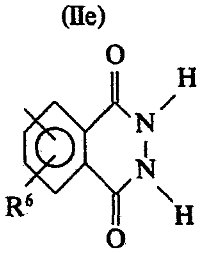

(IIh)

ist, in denen $R^6$ Wasserstoff, Chlor, Brom, niederes Alkyl, niederes Alkoxy, niederes Carboalkoxy oder

Nitro ist, $R^7$ der Phenylrest, gegebenenfalls durch $R^6$ substituiert,

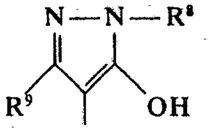

(III)

wobei $R^8$ Phenyl, Tolyl oder Chlorphenyl und $R^9$ Methyl, niederes Carboalkoxy, Carbonamido oder niederes Alkanoylamino bedeuten,

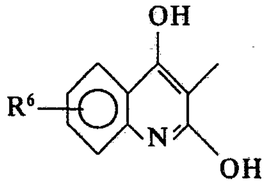

(IV)

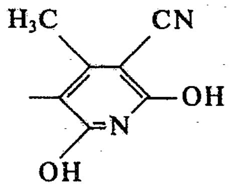

(V)

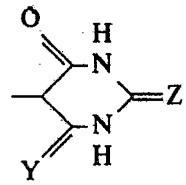

(VI)

wobei Z Sauerstoff, Schwefel, =NCN oder =NH darstellt und Y Sauerstoff oder =NH bedeutet.

Hier und im folgenden bedeutet der Begriff »nieder« bei Alkyl, Alkoxy und Alkanoyl Reste mit 1—4 C-Atomen und bei Carboalkoxy Reste mit 1—4 C-Atomen.

Die Erfindung betrifft weiterhin ein Verfahren zur Herstellung der Disazoverbindungen gemäß Formel I, das dadurch gekennzeichnet ist, daß eine oder mehrere Verbindungen der Formel VII

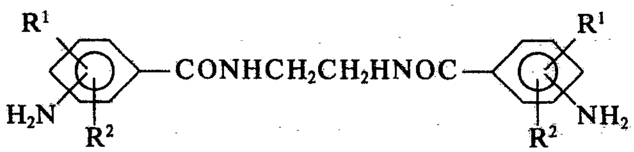

(VII)

in der $R^1$ und $R^2$ die für Formel I genannte Bedeutung haben, bisdiazotiert und mit 2 Äquivalenten einer Kupplungskomponente KH, in der K die für Formel I genannte Bedeutung hat, kuppelt.

Die Erfindung betrifft weiterhin die Verwendung der erfindungsgemäßen Disazoverbindungen als Farbmittel, insbesondere als Pigmente. Von besonderer technischer Bedeutung sind dabei Disazopigmente, die sich von Kupplungskomponenten der Formel IIb ableiten, da diese Pigmente eine sehr hohe Thermostabilität aufweisen und sich zum Einfärben von Polyolefinen bei Temperaturen bis etwa 280°C eignen.

Als Diamine der Formel VII können beispielsweise eingesetzt werden:

N,N′-Bis-(4-aminobenzoyl)-ethylendiamin,
N,N′-Bis-(4-amino-3-nitrobenzoyl)-ethylendiamin,
N,N′-Bis-(3-aminobenzoyl)-ethylendiamin,
N,N′-Bis-(3-amino-4-methyl-benzoyl)-ethylendiamin,
N,N′-Bis-(3-amino-4-methoxy-benzoyl)-ethylendiamin,
N,N′-Bis-(3-amino-4-chlor-benzoyl)-ethylendiamin
oder Gemische solcher Diamine.

Die Kupplung der Bisdiazoverbindungen von Aminen der allgemeinen Formel VII mit den Kupplungskomponenten KH verläuft in üblicher Weise, beispielsweise durch Vereinigung im wäßrigen Medium. Hierbei kann eine einzige Kupplungskomponente oder ein Gemisch mehrerer Kupplungskomponenten eingesetzt werden.

Die Diaminoverbindungen der Formel VII können nach bekannten Verfahren hergestellt werden, beispielsweise durch Kondensation der entsprechend substituierten Nitrobenzoylchloride bzw. Acylaminobenzoylaminoverbindungen mit Ethylendiamin in Gegenwart organischer Lösemittel oder in wäßrigem Medium und anschließende Reduktion der Nitrogruppen bzw. Hydrolyse der Acylaminogruppen.

Die Bisdiazotierung der Diamine der Formel VII kann beispielsweise mit Alkalinitriten und einer Mineralsäure, aber auch mit Nitrosylschwefelsäure erfolgen. Es kann hierbei und bei der anschließenden Kupplung von Nutzen sein, einen Zusatz von oberflächenaktiven Mitteln zu verwenden, wie z. B von nichtionogenen, anionaktiven oder kationaktiven Dispergiermitteln.

Diazotierung und Kupplung können auch in Gegenwart geeigneter organischer Lösemittel durchgeführt werden, wie z. B. Eisessig, niederer Alkanole, Dioxan, Formamid, Dimethylformamid, Dimethylsulfoxid, Pyridin oder N-Methylpyrrolidon. Zur Erzielung der vollen Farbstärke und einer besonders günstigen Kristallstruktur ist es oft zweckmäßig, das Kupplungsgemisch einige Zeit zu erhitzen, beispielsweise zu kochen oder unter Druck über 100°C zu halten, gegebenenfalls in Gegenwart eines organischen Lösemittels wie Ethanol, o-Dichlorbenzol, Dimethylformamid, N-Methylpyrrolidon oder in Gegenwart von Harzseife. Besonders reine und farbstarke Pigmente erhält man mit den erfindungsgemäßen Produkten, wenn man nach der Kupplung die feuchten Preßkuchen oder die getrockneten Pulver einer thermischen Nachbehandlung mit organischen Lösemitteln wie Alkoholen, beispielsweise niederen Alkanolen, Pyridin, Eisessig, Dimethylformamid, N-Methylpyrrolidon, Dimethylsulfoxid, aromatischen Lösemitteln wie Chlorbenzol, Dichlorbenzol, Nitrobenzol oder Xylol unterwirft oder eine Mahlung der Pigmente unter Zusatz von Mahlhilfsmitteln anschließt. Die Herstellung der Pigmente kann auch in Gegenwart eines Trägermaterials, beispielsweise von Schwerspat, erfolgen.

Die neuen Pigmente sind wasserunlöslich und unlöslich in den üblichen organischen Lösemitteln und eignen sich zur Herstellung von Druckfarben, Farblacken und Dispersionsanstrichfarben, zum Färben von Kautschuk, Kunststoffen und natürlichen oder synthetischen Harzen. Sie sind ferner geeignet für den Pigmentdruck auf Substraten, insbesondere Textilfasermaterialien oder anderen flächenförmigen Gebilden wie beispielsweise Papier.

Die Pigmente können auch für andere Anwendungsgebiete, z. B. in fein verteilter Form zum Anfärben von Kunstseide aus Viskose oder Celluloseethern bzw. -estern, Polyamiden, Polyurethanen, Polyglykolterephthalat oder Polyacrylnitrilen in der Spinnmasse oder zum Färben von Papier verwendet werden.

Die Pigmente lassen sich in den genannten Medien gut verarbeiten. Die Färbungen weisen klare Nuancen, sehr gute Farbstärke und Migrationsechtheit und gute bis sehr gute Lichtechtheit auf. Sie sind gegen Hitzeeinwirkung und den Einfluß von Chemikalien, vor allem Lösemitteln, beständig.

In den folgenden Beispielen beziehen sich Prozentangaben auf das Gewicht, sofern nichts anderes angegeben ist. Ebenso sind unter Teilen Gewichtsteile zu verstehen.

## Beispiel 1

24,45 Teile N,N'-Bis-(4-methyl-3-amino-benzoyl)-ethylendiamin werden in 200 Teilen Wasser mit 70 Teilen 31%iger Salzsäure 45 Minuten bei Raumtemperatur angerührt, dann mit Eis auf 0°C abgekühlt und durch Zugabe einer Lösung von 11 Teilen Natriumnitrit in 35 Teilen Wasser unter die Oberfläche der Reaktionsmischung diazotiert. Man rührt eine Stunde bei 0—5°C, zerstört dann den Überschuß an Nitrit durch Amidosulfonsäure und klärt die Bisdiazoniumsalzlösung.

Gleichzeitig werden 36 Teile 5-Acetoacetylaminobenzimidazolon-(2) in 300 Teilen Wasser angeschlämmt und bei 18—20°C mit 47 Teilen 33%iger Natronlauge gelöst. Nach Zugabe von 1 Teil Kieselgur wird die Mischung filtriert und das Filtrat in das Kuppelgefäß übergeführt, in dem eine Mischung aus 500 Teilen Wasser, 43 Teilen 33%iger Natronlauge, 45 Teilen Eisessig sowie eine Lösung von 6 Teilen eines handelsüblichen Gemisches von langkettigen Alkyldimethylbenyl-ammoniumchloriden in 100 Teilen Wasser gut gerührt wird. 30 Minuten nach der Fällung des 5-Acetoacetylaminobenzimidazolon-(2) läßt man dann die geklärte Bisdiazoniumsalzlösung unter die Oberfläche der Suspension im Verlaufe von 60 Minuten zulaufen. Anschließend wird die Pigmentsuspension noch 45 Minuten bei Raumtemperatur, dann weitere 60 Minuten bei 80—85°C gerührt und dann filtriert. Der salzfrei gewaschene Preßkuchen wird in 400 Teilen Wasser suspendiert, in ein Druckgefäß gefüllt und nach Zugabe von 600 Teilen iso-Butanol 5 Stunden bei 160°C gerührt.

Nach der azeotropen Destillation des iso-Butanols wird die wäßrige Pigmentsuspension filtriert und der Filterkuchen bei 65°C getrocknet. Man erhält 59,7 Teile eines orangen Pigments der Struktur

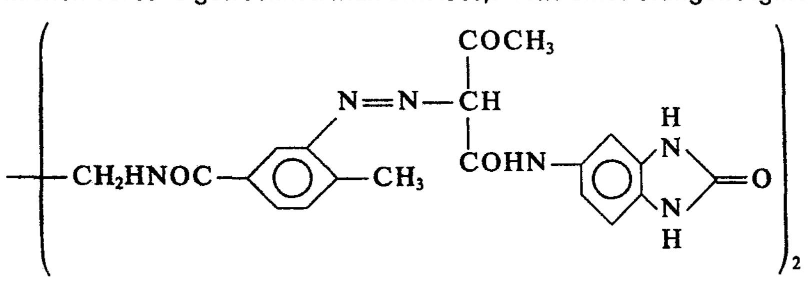

Beim Einarbeiten in einen Alkydharz-Melaminharz-Klarlack ergeben sich gelb-orange Färbungen mit einwandfreier Überlackierechtheit. Mit dem Pigment gefärbtes Niederdruckpolyethylen zeichnet sich durch sehr hohe Hitzebeständigkeit aus. Die Lichtechtheit sowohl im Lack als auch im Kunststoff ist ebenfalls sehr gut.

## Beispiel 2

27,6 Teile N,N'-Bis-(4-chlor-3-amino-benzoyl)-ethylendiamin werden wie im Beispiel 1 diazotiert.

Gleichzeitig werden 42 Teile 2,5—Dimethoxy-4-chlor-acetessiganilid in 350 Teilen Wasser angeschlämmt und mit 40 Teilen 33%iger Natronlauge bei 15—18° C gelöst. Nach Zusatz von 1 Teil Kieselgur wird die Mischung filtriert und das Filtrat in das Kuppelgefäß übergeführt, in dem eine Mischung aus 500 Teilen Wasser, 47 Teilen 33%iger Natronlauge, 42 Teilen Eisessig und eine Lösung von 6 Teilen eines Gemisches von langkettigen Alkyl-dimethylbenzyl-ammoniumchloriden in 100 Teilen Wasser gut gerührt wird.

Die Suspension des 2,5-Dimethoxy-4-chlor-acetessiganilids wird 20 Minuten bei 18—20° C gerührt, dann erfolgt der Zulauf der geklärten Bisdiazoniumsalzlösung unter die Oberfläche der Suspension im Verlauf von 60 Minuten. Der pH-Wert fällt dabei von 6,0 auf 4,5 und wird dann durch Zugabe von 2N Natronlauge bei 4,5 gehalten. Man rührt zunächst noch 60 Minuten bei Raumtemperatur, dann weitere 60 Minuten bei 80—85° C. Dann wird das Pigment filtriert und der Filterkuchen gründlich mit Wasser gewaschen. Der feuchte Filterkuchen wird in 1800 Teile Eisessig eingetragen und nach Zugabe von 6 Teilen eines Gemisches von langkettigen Alkyl-dimethyl-benzyl-ammoniumchloride 6 Stunden bei 100° C gerührt.

Nach der Filtration wäscht man mit Alkohol, dann mit Wasser und trocknet bei 65° C.

Man erhält 65,6 g eines gelben Pigmentpulvers der Struktur

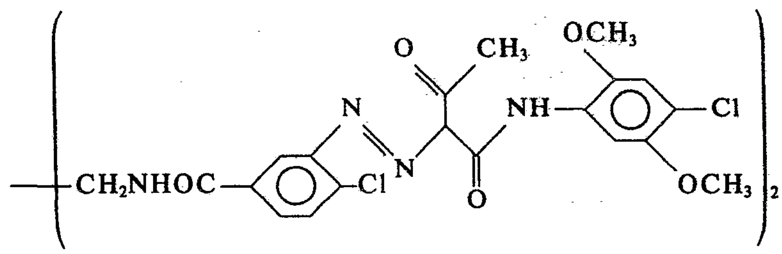

welches beim Einarbeiten in einen Alkydharz-Melaminharz-Klarlack gelbe Färbungen mit einwandfreier Überlackierechtheit ergibt. Mit dem Produkt eingefärbtes Niederdruckpolyethylen zeichnet sich durch gute Hitzestabilität aus. Die Lichtechtheiten sowohl im Lack als auch im Druck und im Kunststoff sind ebenfalls gut.

Entsprechend Beispiel 1 und 2 können die in der folgenden Tabelle aufgeführten Pigmente hergestellt werden:

| Beispiel | Diamin | Kupplungskomponente | Nuance |
|---|---|---|---|
| 3 | 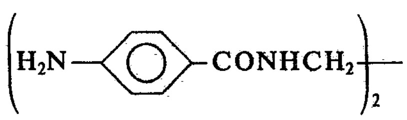 | 5-Acetoacetylamino-benzimidazolon-(2) | grünst. gelb |
| 4 | desgl. | 6-Methyl-5-acetoacetylamino-benzimidazolon-(2) | rotst. gelb |
| 5 | desgl. | 2,4-Dimethoxy-5-chlor-acetessiganilid | gelb |
| 6 | desgl. | 2,5-Dimethoxy-4-chlor-acetessiganilid | rotst. gelb |
| 7 | desgl. | 7-Chlor-5-acetoacetyl-aminobenzimidazolon-(2) | gelb |
| 8 | 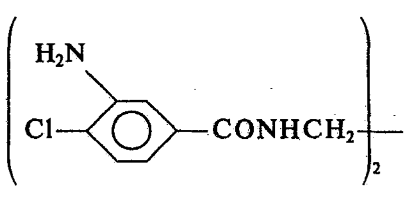 | 5-Acetoacetylamino-benzimidazolon-(2) | orange |
| 9 | desgl. | 2,4-Dimethoxy-5-chlor-acetessiganilid | gelb |
| 10 | desgl. | 2,5-Dimethoxy-4-chlor-acetessiganilid | rotst. gelb |

Fortsetzung

| Beispiel | Diamin | Kupplungskomponente | Nuance |
|---|---|---|---|
| 11 | 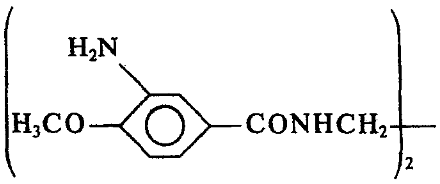 | 5-Acetoacetylamino-benzimidazolon-(2) | gelbst. orange |
| 12 | desgl. | 7-Chlor-5-acetoacetylamino-benzimidazolon-(2) | gelb |
| 13 | desgl. | 2,5-Dimethoxy-4-chlor-acetessiganilid | grünst. gelb |
| 14 | desgl. | 1-(p-Tolyl)-3-methyl-pyrazolon-(5) | rotst. gelb |
| 15 | 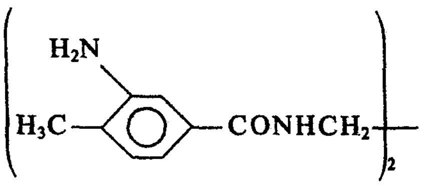 | 2-Methoxyacetessiganilid | grünst. gelb |
| 16 | desgl. | 2,5-Dimethoxy-4-chlor-acetessiganilid | gelb |
| 17 | 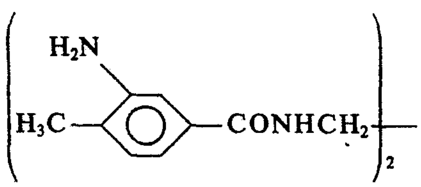 | 1-(p-Toluol-)-3-methyl-pyrazolon-(5) | rotst. gelb |
| 18 | desgl. | 3-Cyano-4-methyl-6-hydroxy-pyridon-(2) | rotst. gelb |
| 19 | 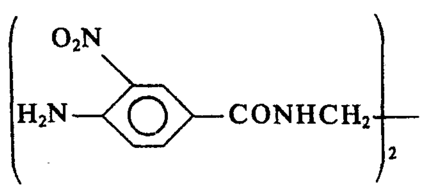 | 5-Acetoacetylamino-benzimidazonon-(2) | rotst. gelb |
| 20 | desgl. | 2,5-Dimethoxy-4-chlor-acetessiganilid | rotst. gelb |

**Patentansprüche**

1. Verbindungen der allgemeinen Formel I

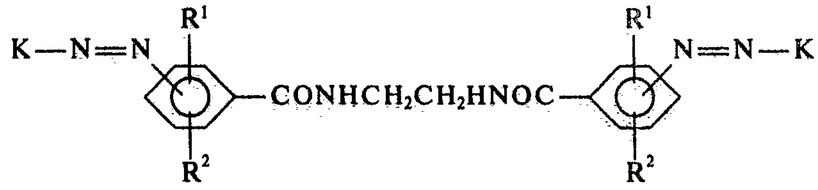

(I)

worin $R^1$ und $R^2$ gleich oder verschieden sind und Wasserstoff, Chlor oder Brom, Methyl, Ethyl, Methoxy, Ethoxy oder Nitro und K gleiche oder verschiedene Reste von enolisierbaren Ketomethylen-Verbindungen bedeuten, die keine wasserlöslichmachenden Gruppen enthalten.

2. Verfahren zur Herstellung der Verbindungen gemäß Anspruch 1, dadurch gekennzeichnet, daß man ein Äquivalent der durch Bisdiazotierung des Diamins der Formel VII

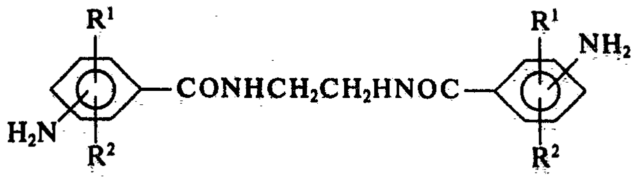

(VII)

erhaltenen Bisdiazoniumverbindung, worin $R^1$ und $R^2$ die im Anspruch 1 angegebenen Bedeutungen haben, mit zwei Äquivalenten einer oder mehrerer Verbindungen der Formel KH kuppelt, wobei K die im Anspruch 1 angegebene Bedeutung hat.

3. Verwendung der Verbindungen gemäß Anspruch 1 als Pigmente.

4. Verwendung der Verbindungen gemäß Anspruch 1 zum Färben bzw. Bedrucken von Kunststoffen, natürlichen und synthetischen Harzen, Kautschuk, Papier, Viskoseseide, Zelluloseestern bzw. -ethern, Polyolefinen, Polyacrylnitril oder Polyglykolterephthalaten, sowie zur Herstellung von Druckfarben, Lackfarben oder Dispersionsanstrichfarben.

**Claims**

1. Compounds of the general formula I

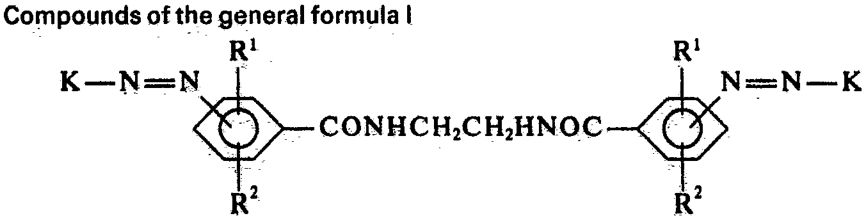

(I)

in which $R^1$ and $R^2$ are identical or different and denote hydrogen, chlorine or bromine, methyl, ethyl, methoxy, ethoxy or nitro and K denotes identical or different radicals of enolizable ketomethylene compounds which do not contain groups imparting solubility in water.

2. Process for the preparation of the compounds according to Claim 1, characterized in that one exuivalent of the bisdiazonium compound obtained by bisdiazotizing the diamine of the formula VII

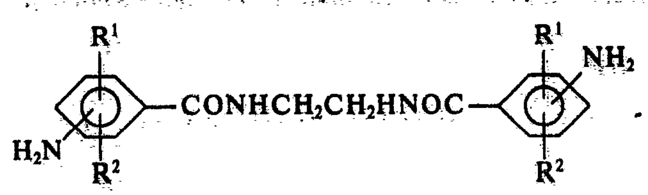

(VII)

in which $R^1$ and $R^2$ have the meanings indicated in Claim 1, is coupled with two equivalents of one or more compounds of the formula KH, in which K has the meaning indicated in Claim 1.

3. Use of the compounds according to Claim 1 as pigments.

4. Use of the compounds according to Claim 1 for coloring and printing respectively of plastics, natural and synthetic resins, rubber, paper, viscose silk, cellulose esters and ethers respectively, polyolefines, polyacrylonitrile or polyglycolterephthalates and for the preparation of printing inks, lacquers or dispersion paints.

**Revendications**

1. Composés répondant à la formule générale I:

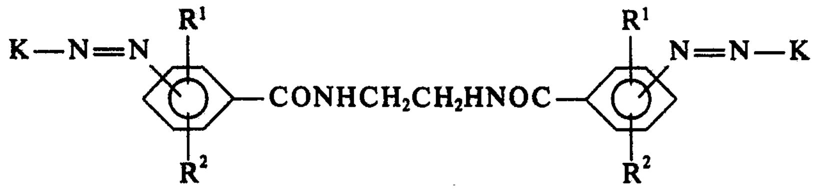

(I)

dans laquelle les symboles $R^1$ et $R^2$ représentent chacun, indépendamment les uns des autres, un atome d'hydrogène, de chlore ou de brome ou un radical méthyle, éthyle, méthoxy, éthoxy ou nitro, et les symboles K représentent chacun, indépendamment l'un de l'autre, des composés cétométhyléniques énolisables qui ne portent pas de radicaux hydrosolubilisants.

2. Procédé de préparation des composés selon la revendication 1, procédé caractérisé en ce qu'on copule 1 équivalent du composé bis-diazoïque obtenu par bis-diazotation d'une diamine répondant à la formule VII:

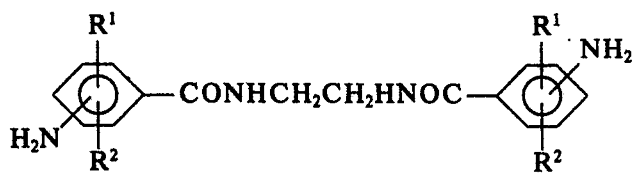

(VII)

dans laquelle $R^1$ et $R^2$ ont les significations données à la revendication 1, avec 2 équivalents d'un ou plusieurs composés répondant à la formule KH dans laquelle K a la signification donnée à la revendication 1.

3. Application des composés selon la revendication 1 comme pigments.

4. Application des composés selon la revendication 1 à la teinture ou à l'impression de matières plastiques, de résines naturelles ou synthétiques, du caoutchouc, du papier, de la rayonne viscose, d'esters ou d'éthers de la cellulose, de polyoléfines, du polyacrylonitrile ou de poly(-téréphthalates de diols), ainsi qu'à la préparation d'encres d'imprimerie, de nuanceurs ou de peintures-dispersions.